**Europäisches Patentamt**

**European Patent Office**

**Office européen des brevets**

(19)

(11) Veröffentlichungsnummer: **0 210 196**
**B1**

(12) **EUROPÄISCHE PATENTSCHRIFT**

(45) Veröffentlichungstag der Patentschrift: 08.08.90

(21) Anmeldenummer: 86900712.0

(22) Anmeldetag: 23.01.86

(86) Internationale Anmeldenummer:
PCT/AT86/00008

(87) Internationale Veröffentlichungsnummer:
WO 86/04576 14.08.86 Gazette 86/18

(51) Int. Cl.⁵: **C 05 F 3/06**, C 05 F 3/00,
F 26 B 17/10

(54) **VERFAHREN UND VORRICHTUNG ZUM TROCKNEN UND KONDITIONIEREN VON HÜHNERMIST ODER ÄHNLICHEN PASTÖSEN STOFFEN.**

(30) Priorität: 01.02.85 AT 292/85

(43) Veröffentlichungstag der Anmeldung:
04.02.87 Patentblatt 87/06

(45) Bekanntmachung des Hinweises auf die
Patenterteilung:
08.08.90 Patentblatt 90/32

(84) Benannte Vertragsstaaten:
AT BE CH DE FR GB IT LI LU NL SE

(56) Entgegenhaltungen:
GB-A-2 099 969
US-A-2 660 809
US-A-3 697 056

(73) Patentinhaber: EIGNER, Erich
Leitersdorf 4
A-8334 Lödersdorf (AT)

(72) Erfinder: EIGNER, Erich
Leitersdorf 4
A-8334 Lödersdorf (AT)

(74) Vertreter: Pfeifer, Otto, Dipl.-Ing. et al
Patentanwälte Dipl.-Ing. Dr. techn. Schütz,
Alfred Dr. phil. Mrazek, Engelbert Dipl.-Ing.
Holzer, Walter Dipl.-Ing. Pfeifer, Otto
Fleischmanngasse 9
A-1040 Wien (AT)

**Beschreibung**

Die vorliegende Erfindung betrifft ein Verfahren und eine Vorrichtung zum Trocknen und Konditionieren von Hühnermist oder ähnlichen pastösen Stoffen unter Einsatz von Trägermaterialien als Wärmeträger und als Träger von Mikroorganismen.

Der Stand der Technik für das Trocknen von pastösen Stoffen stellt sich wie folgt dar:

Pastöse Stoffe, welche sich pumpen und versprühen lassen, werden mit Sprühtrocknern im schwebenden Luftstrom getrocknet. Für nicht pumpbare Güter müssen teure Versprühvorrichtungen eingesetzt werden. Weiters kommen Kontaktschichttrockner, meist indirekt erwärmt, in Frage. Diese Verfahren werden mit Heißgas bzw. Wärmeträgermaterialien unter Normaldruck gefahren. Für temperaturempfindliche Stoffe werden Grobvakuumtrockner eingesetzt.

Stellvertretend für diesen bekannten Stand der Technik wird die US—A—2 660 809 genannt, worin eine Vorrichtung zum kontinuierlichen Kompostieren von Dung, wie dieser aus tierischen Stallungen anfällt, beschrieben wird.

Dung enthält eine gewisse Menge von Ammoniak in Abhängigkeit vom pH-Wert des tierischen Kots. Üblicherweise hat Dung, der einige Tage im Stall lagert, einen pH-Wert von 8,5 (anaerober Überschuß von $NH_4$). Wird dieser Dung in die beschriebene Kompostiervorrichtung, die eine nicht in allen Zonen steuerbare Belüftung vorsieht, eingeführt und Luft durchgesaugt, so wird Ammoniak zusammen mit Wasserdampf ausgetragen. Dadurch wird einerseits der Stickstoffgehalt im Endprodukt erheblich verringert (um 50%), andererseits entsteht durch die Freisetzung von Ammoniak in die Atmosphäre ein nicht zu vernachlässigendes Umweltproblem.

Alle vorstehend beschriebenen Verfahren sind in Konstruktion und Betrieb technisch anspruchsvoll, von den Investitionskosten hoch und haben sowohl hohen Wärmebedarf als auch hohen Energieverbrauch. Weiterhin muß das getrocknete Endprodukt für die Vermarktung in der Regel nachträglich beispielsweise granuliert werden.

Zielsetzung des vorliegenden erfindungsgemäßen Verfahrens ist es, durch den Einsatz von Mikroorganismen, welche an Trägerelementen konzentriert werden, granulierte, brikettierte oder geschnitzelte pastöse Stoffe mit der geringstmöglichen Energie zu trocknen, wobei ein geringer Teil der vorhandenen organischen aber auch anorganischen Stoffe von den Mikroorganismen in $CO_2$, Wärme und Reststoffe umgewandelt wird. Sehr oft sind diese organischen Stoffe im Endprodukt unerwünscht, da sie unangenehm riechen und die Haltbarkeit des getrockneten Endproduktes einschränken. Letztendlich soll das getrocknete Produkt in Granulatform aus dem Trocknungsprozeß kommen und so vermarktet werden können.

Das erfindungsgemäße Verfahren wird in der Folge am Beispiel von Hühnermist beschrieben, ist aber in keiner Weise auf dieses Anwendungsgebiet beschränkt. Im Zuge der weltweiten Tendenz, wieder biologische Düngemittel einzusetzen, gibt es Versuche, den Hühnermist aus Massentierhaltungen so aufzubereiten, daß er problemlos gelagert und auch in Supermärkten verkauft werden kann. Wesentlich ist hierbei, daß der Wassergehalt auf unter 15% gesenkt wird, daß sterilisiert wird, um alle gefährlichen Bakterien zu töten, und daß der Geruch soweit eingedämmt wird, daß keine Belästigung der Umgebung erfolgt.

Stand der Technik ist heute, daß der Mist entweder sonnengetrocknet wird, wenn es klimatisch möglich ist und anschließend in einem Trommeltrockner mittels Ölbrenner die Sterilisierung und Geruchsfreimachung erfolgt. Anstelle eines Trommeltrockners werden auch Bandtrockner eingesetzt. Es wurden auch Versuche unternommen, mittels indirekter Trockner, wie beispielsweise eines Röhrentrockners, zu arbeiten, wobei es aber zu Betriebsstörungen wegen Verstopfung kam. Wieterhin wurden auch schon Verfahren und Vorrichtungen zur Herstellung von Düngemitteln aus organischen Abfallstoffen, insbesondere Tierkot, vorgeschlagen, in welchen der einer biologischen Verrottung ausgesetzte Kot nachfolgend getrocknet wird.

Bei allen diesen bekannten Verfahren treten zwei Probleme auf, nämlich einerseits eine beträchtliche Geruchsbelästigung der Umwelt, die nur mit sehr teuren Gasreinigungsanlagen beseitigt werden könnte, und anderseits das Problem der Energiekosten. Die Trocknungskosten mit Schweröl betragen bis zu 40% der Gesamtkosten.

Diese Nachteile der bekannten Verfahren lassen sich durch das erfindungsgemäße Verfahren zum Trocknen und Konditionieren von Hühnermist oder ähnlichen pastösen Stoffen mit organischem Anteil, welche in Strangform, geschnitzelt, granuliert, brikettiert oder faserig vorliegen und durch Vermengen mit organischen oder anorganischen, geformten, stabilen Materialien ein loses, luftdurchlässiges Haufwerk ergeben, überwinden. Das erfindungsgemäße Verfahren zeichnet sich dadurch aus, daß es in zwei Teilphasen, einer mikrobiologischen Phase und einer Durchströmungstrocknungsphase, ausgeführt wird, welche unmittelbar nacheinander in ein- und derselben Vorrichtung durchgeführt werden, indem in der mikrobiologischen Phase mit Kohlendioxid konditionierte Luft in der geschlossenen Vorrichtung gesteuert durch das Haufwerk geführt und damit einerseits eine pH-Wert-Absenkung und anderseits im Haufwerk ein Klima geschaffen wird, in welchem auf geformten, stabilen Trägerelementen angesiedelte, das Haufwerk besiedelnde selektive Mikroorganismen optimale Lebensbedingungen vorfinden, um einen Teil oder alle organischen Anteile der zu behandelnden Stoffe aerob aufzuarbeiten, wobei das entstehende $CO_2$ von der vorbeiströmenden Luft mitgenommen und die Luft durch die freiwerdende Wärme erwärmt wird, Wasserdampf aus dem Haufwerk abtransportiert wird und wobei die Temperatur im Haufwerk bis ca. 80°C ansteigen gelassen wird, und wobei die gesteuerte und konditionierte Luftmenge, beispielsweise durch Temperaturfühler und/oder Feuchtigkeitsanzeiger im Haufwerk, so gesteuert wird, daß weder Wasserdampfsättigung eintritt noch sich die Temperatur des Haufwerkes der Kühlgrenztemperatur annähert, und daß die mikrobiologische Phase dann in die Durchströmungstrocknungsphase übergeleitet wird, wenn die Temperatur im Haufwerk wieder gefallen ist, beispielsweise unter 60°C, indem dann die das Haufwerk durchströmende, nicht feutigkeitsgesättigte Luftmenge auf ein Vielfaches der Luftmenge der mikrobiologischen Phase gesteigert wird und die Durchströmungstrocknungsphase bei Erreichen des gewünschten Trocknungsgrades im Haufwerk beendet wird.

In weiterer Ausgestaltung die Erfindung hat es sich als zweckmäßig erwiesen, daß die geformten stabilen Trägerelemente in der Vorrichtung an Seilen elastisch aufgehängt werden und der jeweilige zu behandelnde Stoff über ein Verteilerorgan aufgegeben wird, sich zwischen den Seilen ablagert und durch die geformten, stabilen Trägerelemente zusätzlich abgestützt wird, wobei gegebenenfalls durch Vibration der gespannten Seile und des Innenteiles der Vorrichtung eine gleichmäßige Verteilung des Stoffes zwischen den Seilen und den geformten, stabilen Trägerelementen erreicht werden kann.

Eine weitere, vorteilhafte Ausgestaltung des erfindungsgemäßen Verfahrens sieht vor, daß die gesteuerte, konditionierte Luft für die mikrobiologische Phase und auch die nicht feuchtigkeitsgesättigte Luft für die Durchströmungstrocknungsphase Abluft, beispielsweise aus Massentierhaltungen, ist und mittels eines Wärmeaustauschers durch die aus dem Verfahren kommende Abluft erwärmt wird, wobei der Wärmeaustauscher gleichzeitig als Kondensator im Zentrum der Vorrichtung angeordnet ist und die Bildung einer Sattdampfatmosphäre in der Vorrichtung verhindert und gleichzeitig den Unterdruck im Reaktor erhöht.

Gemäß einer weiteren, vorteilhaften Ausführungsform des erfindungsgemäßen Verfahrens kann zur Erzielung optimaler Arbeitsbedingungen der selektiven Mikroorganismen der im Haufwerk herrschende pH-Wert gezielt auf einen neutralen oder eventuell schwach sauren Bereich verändert werden, beispielsweise durch Zusatz von $CO_2$ zu der das Haufwerk durchströmenden konditionierten Luft. Ein Zusatz von Rauchgas hat sich für diesen Zweck als besonders zweckmäßig erwiesen.

Im erfindungsgemäßen Verfahren kann die Trocknung, welche gleichzeitig auch die Konditionierung des Endproduktes ergibt, so durchgeführt werden, wie in der angeschlossenen Zeichnung beispielhaft dargestellt ist.

Der zuvor beispielsweise mittels einer Presse spezieller Bauart zu kleinen Strängen geformte Hühnermist 27 wird über ein Förderband 26 in den Reaktor 1 gefördert und mittels eines Verteilorgans 12 lose, das heißt luftdurchlässig, auf den bereits getrockneten Hühnermist, welcher sich im Reaktor befindet, aufgeschüttet. Dieser wird gleichzeitig am Boden des Reaktors in gleicher Menge abgezogen, wie Frischgut oben zugegeben wird. Im Rekator 1 sind beispielsweise vertikal hängend Trägermaterialien in Form von Seilen mit daran befestigten, in der Regle organischen Trägerelementen vorgesehen. An diesen Trägermaterialien hat sich im Zuge das Anfahrens des Reaktors eine große Anzahl von selektiven Mikroorganismen angesiedelt.

Selektiv soll hier bedeuten, daß jene Mikroorganismen, welche für den jeweiligen Hühnermist und für die im Reaktor vorgesehenen Umweltbedingungen am besten geeignet sind, dominieren. Dadurch wird der mikrobiologische Prozeß optimiert, die Verweilzeit verkürzt und unerwünschte organische Stoffe werden optimal beseitigt. Natürlich können diese Trägermaterialien auch vor ihrem Einsatz mit selektiven Mikroorganismen bevölkert werden.

Sobald der Füllprozeß abgeschlossen ist, beginnt die erste Phase des Trocknungsprozesses, die mikrobiologische Phase. Durch das lose Haufwerk wird eine definierte Menge Luft 28 durchgeschickt. Diese übernimmt die Sauerstoffversorgung der Mikroorganismen und transportiert Wärme, $CO_2$ und Wasserdampf ab. Diese Wärme wird in einem Wärmeaustauscher 18 zum Teil der frisch zugeführten Luft abgegeben. Die Bakterien dringen nun aus den Trägerelementen, die beispielsweise würfelförmig ausgebildet sein können, rasch in das frische Granulat ein und beginnen ihre Arbeit. Diese ist ähnlich wie in einem Koposthaufen, nämlich sie zerlegen verschiedene organische Substanzen, vorrangig Zukker, Fettsäure und andere leicht zerlegbare Kohlenstoffverbindungen in $CO_2$ und Reststoffe, wobei Wärme entsteht. Diese Wärme entsteht auch im Inneren des jeweiligen Granulates und treibt die Feuchtigkeit an die Oberfläche, von wo sie von der vorbeistreichenden Luft mitgenommen wird und am Wärmeaustauscher 18 zum Großteil kondensiert und abgeführt wird.

An einer Versuchsanlage konnte beispielsweise festgestellt werden, daß dann, wenn die Prozeßführung so gesteuert wird, daß nie eine Sattdampfatmosphäre entsteht, nur sehr geringe Mengen Verunreinigungen bzw. Wertstoffe wie Ammoniak im Kondensat anzutreffen sind und daher das Kondensat, welches einen pH-Wert von 7,8 bis 8 aufweist, problemlos in die Kanalisation eigeleitet werden kann.

Ein zweiter wesentlicher Punkt für die Prozeßführung liegt darin, daß die Kühlgrenztemperatur nicht erreicht werden darf, da sonst die Mikroorganismen ihre Arbeit stark reduzieren oder ganz einstellen. In der praktischen Durchführung des Verfahrens kann der Prozeß über eine Klappe vor dem Gebläse gesteuert werden, welche durch Temperatur- und/oder Feuchtigkeitsgeber im Inneren des Reaktors verstellt wird.

Nach 20 bis 30 Stunden, in Abhängigkeit von der Feuchte des Frischgutes, ist die Feuchtigkeit im Gut unter 40% gesunken und die Guttemperatur beginnt leicht abzufallen. Das weist darauf hin, daß die Mikroorganismen ihre Arbeit einstellen, da die Feuchtigkeit zu gering ist. In der Versuchsanlage wurde zu diesem Zeitpunkt eine Guttemperatur von 70 bis 80°C gemessen. Damit ist die mikrobiologische Phase des Prozesses abgeschlossen. In der Versuchsanlage konnte festgestellt werden, daß alle unangenehm riechenden Bestandteile umgewandelt wurden und das Endprodukt keine Geruchsbelästigung verursacht.

Hierauf wird mittels eines Gebläses Luft, beispielsweise aus einem Hühnerstall, durch das Gut gesaugt. Nach 10 bis 15 Stunden erreicht das Gut dann eine Endfeuchte von unter 15% und ist damit unbegrenzt haltbar. Der Prozeß beginnt von neuem. Für die gesamte Prozeßdauer ist kein Personal oder Prozeßführer notwendig, weil der Ablauf mittels eines einfachen Prozeßsteuergerätes automatisch geregelt werden kann.

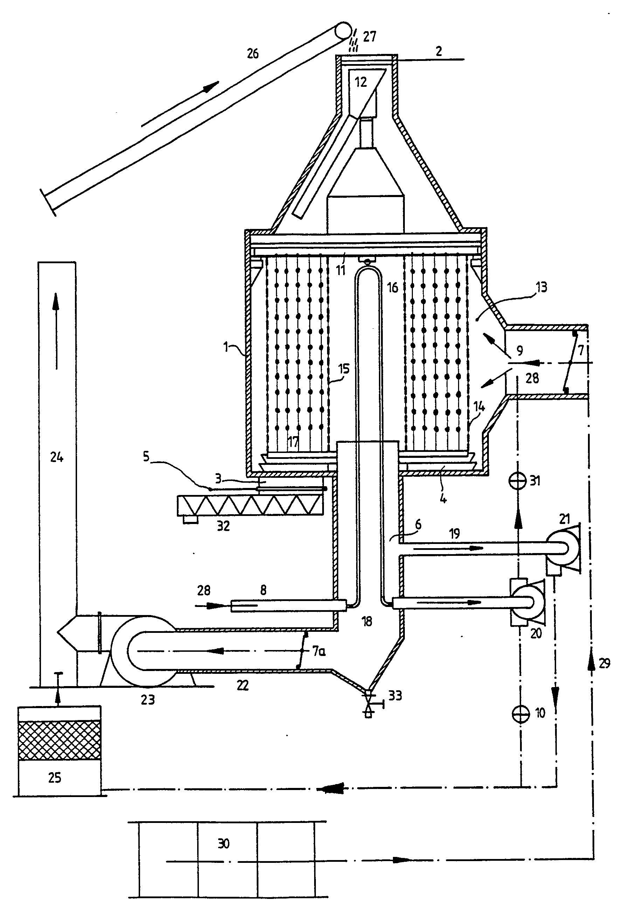

Das erfindungsgemäße Verfahren wird anhand der in der Zeichnung beispielhaft dargestellten Vorrichtung näher erläutert.

Das zuvor geformte Frischgut 27 wird mittels eines Förderbandes 26 in den Reaktor 1 über die Verteilerschurre 12, welche sich langsam um die Mittelachse des Reaktors 1 dreht, aufgegeben. Gleichzeitig wird mittels Austragräumer 4 die gleiche Volumsmenge trockenes Gut über eine Auslaßschurre 3 und eine Förderschnecke 32 abgezogen. Falls erforderlich, kann mittels eines Vibrators 16 der elastisch gelagerte Innenteil des Reaktors 1 vibriert werden, damit die anhaftenden, getrockneten Gutteilchen gelöst und ebenfalls ausgetragen werden. Wenn der Füllvorgang beendet ist, beginnt die mikrobiologische Phase des Verfahrens. Die Schieber 2 und 5 werden dicht geschlossen. Das geformte Frischgut liegt lose zwischen den von den Trägern 11 koaxial zur Reaktorachse 1 abgehängten Lochblechzylindern 14 und 15 sowie den von den sternförmig angeordneten Trägern 11 abgehängten Seilen 17 mit daran befestigten Holzwürfeln (Mikroorganismenträger). Eine bestimmte Luftmenge 28 wird nun vom Gebläse 20 durch die Leitung 8 angesaugt und in die Luftzuleitung 9 geblassen. Vorher sind die Klappen 7, 7a dicht geschlossen worden. Das Gebläse 21 saugt nun Luft und Wasserdampf aus dem Zentrum des Reaktors 1 über eine Rohrleitung 19 ab und führt dieses Luft-Wasserdampfgemenge beispielsweise durch ein Torffilter 25, in welchem ebenfalls Mikroorganismen angesiedelt sind, und danach in den Kamin 24.

Die im Wärmeaustauscher 18 vorgewärmte Luft 28 wird von der Luftzuleitung 9 über den Luftverteilerraum 13 um den Reaktor verteilt und strömt durch den Lochblechzylinder 14 und durch das lose geschüttete Frischgut in das Zentrum des Reaktors, welches durch den Lochblechzylinder 15 gebildet wird. Die Luft versorgt die Mikroorganismen, welche an den Mikroorganismenträgern angesiedelt sind, mit Sauerstoff. Durch das Frischgut wird die Luft mit Wasserdampf gesättigt, sodaß die optimale Umwelt für ein schnelles Wachstum der Mikroorganismen gegeben ist.

Diese dringen in das Frischgut ein und beginnen ihre Arbeit. Es entsteht $CO_2$, welches mit der vorbeiströmenden Luft abgeführt wird, und Wärme. Die Wärme erhöht kontinuierlich die Guttemperatur und es wird auch die durchströmende Luft 28 erwärmt. Dadurch steigt wiederum die Aufnahmefähigkeit für Wasserdampf. Dieser Wasserdampf wird kontinuierlich dem Gut entzogen. Im Zentrum des Reaktors sammelt sich die erwärmte, wasserdampfgesättigte Luft und strömt durch den Wärmeaustauscher 18. Hier wird sie wieder abgekühlt, da die im Inneren des Wärmeaustauschers strömende frische Zuluft 28 beispielsweise mit 20°C ankommt, während die Luft aus dem losen Schüttgut von 40°C langsam bis auf 80°C ansteigt und mit Wasserdampf gesättigt ist. Durch die Abkühlung der Luft kondensiert ein Teil des Wasserdampfes an den Wärmetauscherrohren 18, wodurch der Wärmeübergang sehr gut wird, von wo das Wasser, das kaum verunreinigt ist, abgeleitet wird.

Das verbleibende Luft-Wasserdampfgemisch geht, wie zuvor beschrieben, über Gebläse 21 in den Kamin. Die Kondensatstelle im Zentrum des Reaktors fördert zusätzlich die Strömung durch das lose Schüttgut und verhindert die Bildung einer Sattdampfatmosphäre im Schüttgut. Dadurch wird wesentlich weniger Wertstoff, wie beispielsweise Ammoniak, aus dem Gut ausgewaschen und es entsteht auch kein Abwasserproblem.

Die Luftmenge 28 wird durch einige Temperatursonden im Inneren des Reaktors 1 mittels einer Klappe in der Zuleitung 8 gesteuert.

Sobald die mikrobiologische Phase abgeschlossen ist, wird das Gebläse 20 abgestellt, die Klappe 7, 7a geöffnet und das Gebläse 23 eingeschaltet. Das Gebläse 21 läuft weiter. Nun wird Luft 29 beispielsweise aus dem Hühnerstall 30 angesaugt. Diese Luft hat 70% Feuchtigkeit und 22—27°C. Sie strömt durch das lose Schüttugt und nimmt Wasser bis zur Sättigung auf. Durch die Rohrleitung 22 wird die gesättigte Abluft in den Kamin geführt.

Weiters kann die Luft 28 auch durch das Torffilter 25 mittels des Gebläses 20 geführt werden, wobei Klappe 10 geöffnet und Klappe 31 geschlossen wird. Dadurch wird das Torffilter gespült und das gesammelte Wasser wiederum abgeführt. Nach einer bestimmten Zeit, welche vom Einsatzgut abhängig ist, wird der Torf gewechselt. Der Torf aus dem Filter, welcher mit verschiedenen Wertstoffen angereichert ist, wird beispielsweise dem Frischgut zugemischt.

Sobald die gewünschte Endfeuchte erreicht ist, werden die Gebläse abgestellt und eine weitere Menge Frischgut kann aufgegeben werden. Der Trocknungsprozeß kann auch ohne das Gebläse 20 durchgeführt werden.

Die Erfindung bezieht sich auch auf eine Vorrichtung zur Durchführung des erfindungsgemäßen Verfahrens, die sich dadurch auszeichnet, daß in einem geschlossenen zylindrischen Behälter 1 ein Einbau über sternförmig angeordnete Träger 11 elastisch abgehängt ist, wobei der Einbau aus zwei koaxialen, an Trägern 11 abgehängten, luftdurchlässigen Zylindermänteln 14, 15 besteht, zwischen welchen, beispielsweise an Seilen, welche an den Trägern 11 befestigt sind, die geformten, stabilen Trägerelemente verteilt abgehängt sind, und daß eine drehbare Aufgabeschurre 12 vorgesehen ist, daß Luft durch eine Luftzuleitung 9 in den Luftverteilraum 13, der vom zylindrischen Behälter 1 einerseits und dem elastisch aufgehängten Zylindermantel 14 andererseits gebildet ist, eintritt und über den elastisch aufgehängten Zylindermantel 15 und ein Bodenauslaßrohr 6 wieder aus dem Behälter 1 abgesaugt wird, und daß im Zylinder 15 ein Wärmeaustauscher 18 angeordnet ist und daß der getrocknete Stoff über ein Räumwerk 4 in eine Abzugschurre 3 ausgetragen wird, wobei der Einbau mittels Vibrator 16 vertikal vibrierbar abgehängt ist, um das Austragen sicherzustellen.

Das erfindungsgemäße Verfahren und die zugehörige Vorrichtung erlauben ein Trocknen und Konditionieren von pastösen Stoffen mit einem Minimum an Energie unter gleichzeitiger Ausbildung eines unmittelbar in Granulatform anfallenden, haltbaren und von unangenehmen Gerüchen freien wertvollen Produktes.

**Patentansprüche**

1. Verfahren zum Trocknen und Konditionieren von Hühnermist oder ähnlichen pastösen Stoffen mit organischem Anteil, welche in Strangform, geschnitzelt, granuliert, brikettiert oder faserig vorliegen und durch Vermengen mit organischen oder anorganischen, geformten, stabilen Materialien ein loses, luftdurchlässiges Haufwerk ergeben, dadurch gekennzeichnet, daß das Verfahren in zwei Teilphasen, einer mikrobiologischen Phase und einer Durchströmungstrocknungsphase, ausgeführt wird, welche unmittelbar nacheinander in ein- und derselben Vorrichtung durchgeführt werden, indem in der mikrobiologischen Phase mit Kohlendioxid konditionierte Luft in der geschlossenen Vorrichtung gesteuert durch das Haufwerk geführt und damit einerseits eine pH-Wert-Absenkung und anderseits im Haufwerk in Klima geschaffen wird, in welchem auf geformten, stabilen Trägerelementen angesiedelte, das Haufwerk besiedelnde selektive Mikroorganismen optimale Lebensbedingungen vorfinden, um einen Teil oder alle organischen Anteile der zu behandelnden Stoffe aerob aufzuarbeiten, wobei das entstehende $CO_2$ von der vorbeiströmenden Luft mitgenommen und die Luft durch die freiwerdende Wärme erwärmt wird, Wasserdampf aus dem Haufwerk abtransportiert wird und wobei die Temperatur im Haufwerk bis ca. 80°C ansteigen gelassen wird, und wobei die gesteuerte und konditionierte Luftmenge, beispielsweise durch Temperaturfühler und/oder Feuchtigkeitsanzeiger im Haufwerk, so gesteuert wird, daß weder Wasserdampfsättigung eintritt noch sich die Temperatur des Haufwerkes der Kühlgrenztemperatur annähert, und daß die mikrobiologische Phase dann in die Durchströmungstrocknungsphase übergeleitet wird, wenn die Temperatur im Haufwerk wieder gefallen ist, beispielsweise unter 60°C, indem dann die das Haufwerk durchströmende, nicht feuchtigkeitsgesättigte Luftmenge auf ein Vielfaches der Luftmenge der mikrobiologischen Phase gesteigert wird und die Durchströmungstrocknungsphase bei Erreichen des gewünschten Trocknungsgrades im Haufwerk beendet wird.

2. Verfahren nach Anspruch 1, dadurch gekennzeichnet, daß die geformten stabilen Trägerelemente in der Vorrichtung an Seilen elastisch aufgehängt werden und der jeweilige zu behandelnde Stoff über ein Verteilorgan aufgegeben wird, das zwischen den Seilen gelagert und durch die geformten, stabilen Trägerelemente zusätzlich abgestützt wird, wobei gegebenenfalls durch Vibration eine gleichmäßige Verteilung des Stoffes zwischen den Seilen und den geformten, stabilen Trägerelementen erreicht wird.

3. Verfahren nach Anspruch 1, dadurch gekennzeichnet, daß die gesteuerte, konditionierte Luft für die mikrobiologische Phase und auch die nicht feuchtigkeitsgesättigte Luft für die Durchströmungstrocknungsphase Abluft, beispielsweise aus Massentierhaltung, ist und mittels eines Wärmeaustauschers durch die aus dem Verfahren kommende Abluft erwärmt wird, wobei der Wärmeaustauscher gleichzeitig als Kondensator im Zentrum der Vorrichtung angeordnet ist und die Bildung einer Sattdampfatmosphäre in der Vorrichtung verhindert und gleichzeitig den Unterdruck im Reaktor erhöht.

4. Verfahren nach Anspruch 1, dadurch gekennzeichnet, daß der Kohlendioxidzusatz in Form von Rauchgas vorgenommen wird.

5. Vorrichtung zur Durchführung des Verfahrens nach einem der Ansprüche 1 bis 4, dadurch gekennzeichnet, daß in einem geschlossenen zylindrischen Behälter (1) ein Einbau (14, 15, 17) über sternförmig angeordnete Träger (11) elastisch abgehängt ist, wobei der Einbau (14, 15, 17) aus zwei koaxialen, an Trägern (11) abgehängten, luftdurchlässigen Zylindermänteln (14, 15) besteht, zwischen welchen, beispielsweise an Seilen (17), welche an den Trägern (11) befestigt sind, die geformten, stabilen Trägerelemente verteilt abgehängt sind, und daß eine drehbare Aufgabeschurre (12) vorgesehen ist, daß Luft durch eine Luftzuleitung (9) in den Luftverteilraum (13), der vom zylindrischen Behälter (1) einerseits und dem elastisch aufgehängten Zylindermantel (14) andererseits gebildet ist, eintritt und über den elastisch aufgehängten Zylindermantel (15) und ein Bodenauslaßrohr (6) wieder aus dem Behälter (1) abgesaugt wird, und daß innerhalb des Zylindermantels (15) eine Wärmeaustauscher (18) angeordnet ist und daß der getrocknete Stoff über ein Räumwerk (4) in eine Abzugsschurre (3) ausgetragen wird, wobei der Einbau (14, 15, 17) mittels Vibrator (16) vertikal vibrierbar abgehängt ist, um das Austragen sicherzustellen.

## Revendications

1. Procédé pour le séchage et le conditionnement de fumier de volailles ou de substances pâteuses analogues contenant une fraction organique se présentant sous forme de boudin, de rognures, de granulés, de briquettes ou de fibres et qui forment par mélange avec des matières stables, moulées, organiques ou non organiques, un produit de déchet meuble, perméable à l'air, caractérisé en ce qu'il est exécuté en deux stades, un stade microbiologique et un stade de séchage à circulation d'air qui sont réalisés immédiatement l'un après l'autre dans un seul et même dispositif, par le fait qu'au cours du stade microbiologique, de l'air conditionné par du dioxyde de carbone est amené à passer de manière réglée à travers le produit de déchet dans le dispositif fermé pour, d'une part, proviquer un abaissement du pH et, d'autre part, créer dans le produit de déchet, des conditions ambiantes dans lesquelles des micro-organismes sélectifs colonisant le produit de déchet, qui sont déposés sur des éléments de support stables, façonnés, trouvent des conditions de vie optimales, afin de traiter en aérobie une partie ou la totalité des fractions organiques des matières à traiter, le $CO_2$ qui se forme étant entraîné par l'air qui passe et l'air étant chauffé par la chaleur dégagée, de la vapeur d'eau étant évacuée du produit de déchet et la température du produit de déchet étant admise à augmenter jusqu'à environ 80°C, et la quantité d'air réglée et conditionnée étant commandée, par exemple par des capteurs de température et/ou des indicateurs d'humidité, dans le produit de déchet d'une manière propre à empêcher qu'il y ait saturation de vapeur d'eau ou que la température du produit de déchet s'approche de la température limite de refroidissement et que le stade microbiologique est remplacé par le stade de séchage à circulation d'air lorsque la température du produit de déchet est à nouveau retombée, par exemple en dessous de 60°C, par le fait que la quantité d'air non saturé en humidité traversant le produit de déchet est alors portée à un multiple de la quantité d'air du stade microbiologique, la phase de séchage à circulation d'air étant achevée lorsque le degré de séchage souhaité dans le produit de déchet est obtenu.

2. Procédé suivant la revendication 1, caractérisé en ce que les éléments de support stables, façonnés dans le dispositif, sont suspendus élastiquement à des câbles et la matière à traiter en question est fournie par l'intermédiaire d'un organe de distribution qui est monté entre les câbles et est, en outre, soutenu par les éléments de support stables, façonnés, une répartition uniforme de la matière entre les câbles et les éléments de support stables, façonnés, étant éventuellement réalisée par vibration.

3. Procédé suivant la revendication 1, caractérisé en ce que l'air conditionné, réglé pour le stade microbiologique, tout comme l'air non saturé en humidité pour le stade de séchage à circulation d'air, est de l'air d'évacuation provenant par exemple d'élevages artificiels intensifs et est chauffé à l'aide d'un échangeur de chaleur par l'air d'évacuation provenant du procédé, l'échangeur de chaleur étant en même temps disposé au centre du dispositif à titre de condensateur et empêchant la formation d'une atmosphère de vapeur saturée dans le dispositif en augmentant simultanément la sous-pression dans le réacteur.

4. Procédé suivant la revendication 1, caractérisé en ce que le dioxyde de carbone est ajouté sous la forme de gaz brûlé.

5. Dispositif destiné à la mise en oeuvre du procédé suivant l'une quelconque des revendications 1 à 4, caractérisé en ce que, dans un récipient cylindrique fermé (1), un montage (14, 15, 17) est suspendu de manière élastique à des supports (11) disposés en étoile, le montage (14, 15, 17) étant constitué de deux corps de cylindres coaxiaux (14, 15) perméables à l'air, suspendus à des supports (11), entre lesquels les éléments de support stables, façonnés sont suspendus de manière répartie, par exemple à des câbles (17) qui sont fixés aux supports (11), et qu'une trémie d'alimentation rotative (12) est prévue, que de l'air pénètre par une conduite d'alimentation en air (9) dans une chambre de distribution d'air (13) constituée par le récipient cylindrique (1) et par le corps de cylindre suspende élastiquement (14), et est aspiré hors du récipient (1) par l'intermédiaire du corps de cylindre suspendu élastiquement (15) et d'un tube d'évacuation inférieur (6) et qu'un échangeur de chaleur (18) est disposé à l'intérieur du corps de cylindre (15) et que la matière séchée est évacuée à l'aide d'un dispositif d'évacuation (4) dans une trémie d'évacuation (3), le montage (14, 15, 17) étant suspendu de manière à pouvoir vibrer verticalement à l'aide d'un vibrateur (16) pour garantir l'évacuation.

## Claims

1. A process for drying and conditioning pasty substances such as chicken manure which are at least partly organic and are in the form of strands, chips, granules, pellets or fibres, which, when mixed with organic or inorganic molded stable materials, result in a loose, air permeable pile of material, characterized in that the process is carried out in one and the same apparatus and in two phases, a microbiological phase immediately followed by a flow-through drying phase, such that, in the microbiological phase, a mixture of air and carbon dioxide is passed through said pile to reduce the pH and to provide optimal environmental conditions for selective microorganisms that have been settled on molded, stable carrier elements and populate the pile of material so as to enable all or part of the organic fractions of the respective substances to be processed aerobically, the resulting carbon dioxide being carried along by the flow of air, the air being heated by the heat released from the process, water vapor is carried off from the pile of material and the temperature in the pile of material being allowed to rise to approximately 80°C, the quantity of the controlled and conditioned air being controlled, for example, by means of temperature sensors and/or humidity indicators disposed in the pile of material, so that water vapour saturation does not occur, nor does the temperature of the pile of material approach the cooling limit temperature, whereupon the microbiological phase is changed to the flow-through drying phase when the temperature in the pile of material has dropped, for example to below 60°C, in that the quantity of not-moisture-saturated air flowing through the pile of material is increased to a multiple of the quantity of air used in the microbiological phase and the flow-through drying phase is terminated when the desired degree of desiccation is reached in the pile of material.

2. The process according to claim 1, characterized in that the molded and stable carrier elements in the apparatus are elastically suspended from cables and the respective substance to be processed is added through a distributor, comes to rest between the cables, and is additionally supported by the molded and stable carrier elements, with vibration being used, if necessary, to realize uniform distribution of the substance between the cables and the molded, stable carrier elements.

3. The process according to claim 1, characterized in that the controlled, conditioned air for the microbiological phase and also the not-moisture-saturated air for the flow-through drying phase is exhaust air, for example, from large-scale animal holdings, and is heated in a heat exchanger by the exhaust air coming from the process, with the heat exchanger simultaneously being disposed in the center of the apparatus to serve as a condenser so as to prevent the formation of a saturated vapour atmosphere in the apparatus while simultaneously intensifying the partial vacuum within the reactor.

4. The process according to claim 1, characterized in that the added carbon dioxide is in the form of flue gas.

5. Apparatus for implementing the process according to one of claims 1 to 4, characterized in that, within a closed cylindrical vessel (1), there is disposed a unit (14, 15, 17) composed of two coaxial air-permeable cylindrical casings (14, 15) which are suspended from supports (11) and between which are located a series of spaced molded stable carrier elements disposed, for example, on cables (17) fastened to the carriers (11), a rotatable feed chute (12) is provided, air enters through an air intake (9) into an air distribution chamber (13) formed, on the one hand, by the cylindrical vessel (1) and, on the other hand, by the elastically suspended cylindrical casing (14) and is extracted from the vessel (1) through the elastically suspended cylinder casing (15) and through an outlet (6) disposed in its bottom, a heat exchanger (18) is provided within the cylindrical casing (15) and the dried substance is discharged by means of a cleaning unit (4) into a discharge chute (3), with said unit (14, 15, 17) being suspended so as to be vertically vibratable by means of a vibrator (16) to assure removal.